(19) Europäisches Patentamt
European Patent Office
Office européen des brevets

(11) **EP 3 025 452 B1**

(12) **EUROPEAN PATENT SPECIFICATION**

(45) Date of publication and mention
of the grant of the patent:
**27.06.2018 Bulletin 2018/26**

(21) Application number: **14744814.6**

(22) Date of filing: **24.07.2014**

(51) Int Cl.:
*H04L 12/24* (2006.01)          *H04L 12/26* (2006.01)
*H04L 12/70* (2013.01)

(86) International application number:
**PCT/EP2014/065890**

(87) International publication number:
**WO 2015/011220 (29.01.2015 Gazette 2015/04)**

(54) **MONITORING NETWORK USE OF RESOURCES**

ÜBERWACHUNG EINES NETZWERKS BEI BELEGUNG VON RESSOURCEN

SURVEILLANCE D'UTILISATION DE RESSOURCES D'UN RÉSEAU

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **26.07.2013 EP 13178123**

(43) Date of publication of application:
**01.06.2016 Bulletin 2016/22**

(73) Proprietors:
• **Koninklijke KPN N.V.
3072 AP Rotterdam (NL)**
• **Nederlandse Organisatie voor toegepast-
natuurwetenschappelijk onderzoek TNO
2595 DA 's-Gravenhage (NL)**

(72) Inventors:
• **MENKOVSKI, Vlado
NL-5613 SB Eindhoven (NL)**
• **DEN HARTOG, Frank
AU-Melba, ACT 2615 (AU)**
• **LIOTTA, Antonio
NL-3311 BZ Dordrecht (NL)**

(74) Representative: **Wuyts, Koenraad Maria
Koninklijke KPN N.V.
Intellectual Property Group
P.O. Box 25110
3001 HC Rotterdam (NL)**

(56) References cited:
EP-A1- 2 276 202          EP-A2- 1 047 223
US-A1- 2007 115 814       US-A1- 2013 080 641

• **DE A ROCHA A A ET AL: "An End-to-End
Technique to Estimate the Transmission Rate of
an IEEE 802.11 WLAN", PROCEEDINGS OF THE
2007 IEEE INTERNATIONAL CONFERENCE ON
COMMUNICATIONS (ICC 2007), 24-28 JUNE 2007,
GLASGOW, UK, IEEE, PISCATAWAY, NJ, USA, 1
June 2007 (2007-06-01), pages 415-420,
XP031125708, DOI: 10.1109/ICC.2007.75 ISBN:
978-1-4244-0353-0**
• **NICOLAI F P: "Capacity Measurement in
small-scale heterogeneous best-effort IP
networks", M.SC. THESIS NO: PVM 2009 - 057,
TNO, TU DELFT , 2 July 2009 (2009-07-02), pages
1-83, XP002556952, Retrieved from the Internet:
URL:http://repository.tudelft.nl/assets/uu
id:26b150ce-6a62-45c4-854a-bf49d7666d24/Fi
nal_thesis.pdf [retrieved on 2009-11-23]**

**Description**

The invention relates to a method and system for assessing the resources of a network and further relates to a gateway device.

**Background of the invention**

Many internet services require significant amount of network resources to provide acceptable quality. When the service provider system is aware of the available resources it can adapt the service in a way that the delivered quality is optimized. Put simply, if a service provider knows a certain bandwidth is required to deliver a service to a customer, and if the service provider can monitor to identify when the bandwidth is available then the service provider can wait until the bandwidth is available before the service is delivered.

For this reason understanding the available resources is important for delivering high quality services. This is particularly true for multimedia services, which have high demand on network throughput, but also require low latency. Commonly the bottle neck for these resources is found at the edge of the network, in the private networks which access internet services. Typically in this case the wider network is the internet and the private networks are small or domestic networks, sometimes called home networks, and which are connected to the wider network via a gateway device.

Network and service monitoring in heterogeneous home networks by Archi Delphinanto, Eindhoven University of Technology, 2012, describes in chapter 7 a solution to the problem of improving service provision which estimates the dynamics in a home network using passive monitoring and which can be used to implement admission control for external services. A disadvantage of passive probing is that not enough information about the network may be available at the time of decision making regarding the admission of a service to the network.

To measure the available resources in a network the provider can initiate an active probing mechanism, where a significant amount of traffic is pushed to the network and the performance is measured. However, active measurement of the utilization adds a significant toll on network resources by generating additional network traffic for both the provider and the private network. Additionally, it delays the start of the service for the duration of the probing. Also, probing can lead to interruptions in the services utilizing the network at the time of probing, and thus produce unwanted degradation in quality.

Many probing mechanisms exist in the state of the art, and are summarized in, for example, Archi Delphinanto, Eindhoven University of Technology, 2012, chapter 5 and references therein. Another example is provided by De A. Rocha et al in "An End-to-End Technique to Estimate the Transmission Rate of an IEEE 802.11 WLAN" in Proceedings of the 2007 IEEE International Conference on Communications (ICC 2007), pages 415-420. These probing mechanisms typically consist of a series of probe packets being transmitted on the network, and analysing their delay times or mutual differences in delay times, while varying parameters such as packet size and probing rate. To obtain a measure of statistical accuracy regarding the result of the probing experiment, for instance a standard deviation, the measurement is repeated a number of times. The total experiment, including the repetitions, typically takes a couple of seconds or less, and thus provides a more or less accurate estimate of the available resources averaged over the total measurement time.

Besides accuracy, confidence is an important statistical property of an estimate, as will be known by the skilled person. The result of a probe may be very accurately measured but have a low confidence, for example if it is measured during a period of high network activity (high entropy), the probability that the accurately measured available network resources will still be available during the following minute or so is very low. Network entropy is a measure of how much the utilization of a network fluctuates, i.e. how frequent and severe these fluctuations appear. Alternatively, the result of a probe may not be accurately measured, for instance with a high standard deviation, or just wrongly measured (wrong result), but have a high confidence, for example the measured value will not change much during a low entropy period if measured repeatedly.

The problem thus remains that services, provided over a highly utilized network, commonly fail to deliver the desired quality. It is therefore a problem to deliver services to a device in a network at an acceptable level of quality.

**Summary of the invention**

The present invention is defined in the appended independent claims to which reference should be made. Advantageous features are set out in the appended dependent claims. In particular a method of assessing the resources in a network is described in which a first measurement is performed in which the resources in the network are measured, a model of network activity is constructed from an assessment of activity in the network, and an estimate of confidence for the validity of the first measurement is derived from the model of network activity. The steps can be conducted in any order, although in a typical embodiment the model of network activity can be constructed in the background while other processes continue in the network. Also in an exemplary embodiment the first measurement can be made when a processor within the network or external to the network makes a request for an estimate or assessment of network resources. Because a measurement is only made when it is requested, the network resources are not overloaded, which might occur if the measurement was made according to a fixed schedule. In a typical embodiment, when the first measurement is made the confidence estimate in the measurement can be derived based on the contents of the model which has been built up in the background. The activity model is, in effect, an historical log of network activity built up over time which allows some degree of confidence to be derived in, for example, how long the measurement of network activity will remain valid. This knowledge, coupled with the first measurement, allows load on the network to be reduced because the measurement taken can be used to estimate network resources, for example available bandwidth or capacity, and the estimate of confidence can be used, for example, to indicate for how long that measurement will remain valid. During the time when the measurement remains valid no more measurements need to be taken, and measuring or probing of the network only need be resumed when the measurement is no longer deemed, or assumed, to be valid.

Thus the first measurement and the estimate of confidence can then be used to assess the level of network resources but also to assess for how long those resources are likely to be available. Thus the number of measurements needed to assess network resources is reduced.

There are two embodiments for reporting the first measurement and estimate of confidence that are particularly advantageous.

In the first embodiment the first measurement is reported along with the estimate of confidence. Here the first measurement and estimate of confidence are delivered or reported either automatically or upon request. They could be delivered or reported to a controller, a CPU, a computer, a service provider, a server, a gateway device or any device or software component capable of delivering services over a network or deciding on the delivery of services over a network. This embodiment is advantageous when the device or software component is capable of using the first measurement and estimate of confidence to assess when or whether a service can be optimally delivered.

Alternatively the first measurement and estimate of confidence could be delivered or reported to a memory location, either together or separately, for use later or for later delivery onto a recipient.

In the second embodiment the first measurement is reported if the estimate of confidence is within a limit, or, a second measurement is performed if the estimate of confidence is not within a limit and the second measurement is reported. This embodiment is particularly advantageous when the device or service to which the results are to be reported does not have the capability of using the estimate of confidence to assess when a service can be optimally delivered. In this embodiment the device performing the method of the assessment reports the first measurement if that first measurement can be relied on to represent a valid assessment of the resources in the network. If the first measurement cannot be relied on then a second measurement is performed and the second measurement reported as the measurement representative of the resources in the network. The device or service to which the results are reported can then make a decision on whether to provide service or not based on the measurement received.

In a particularly advantageous embodiment the estimate of confidence is a time for which the first measurement is valid. This means that the first measurement can be relied upon as a valid measurement which can be used to make decisions about what services can be delivered to the network for the time calculated or derived as the estimate of confidence. In a simple example in which an external service provider wishes to provide a service which will require a certain bandwidth for a particular length of time, the service provider can be apprised of, for example, an available bandwidth coupled to a calculated time for which the bandwidth is expected to remain available.

In an alternative, and equally advantageous, embodiment the estimate of confidence is a chance that the measurement will remain valid over a pre-determined time interval. This means that the first measurement can be tied to an estimate of its likelihood over a pre-determined time interval. This embodiment is particularly useful for telecommunications planning, and as would be understood by the skilled person, for the management of service level agreements.

In a particularly advantageous example the assessment of activity in the network is derived from passive monitoring of the network. This form of monitoring is very unintrusive and does not increase the load on the network.

In a further advantageous embodiment the passive monitoring of the network is performed substantially continuously.

However this is not the only method by which the network activity may be assessed and in an alternative method the network activity may be assessed or otherwise calculated from use of the first measurement. For example, if a series of first measurements happen to be taken over, for example, a short period of time then this can form the basis of an assessment of network activity.

In an alternative embodiment the network activity may be assessed from a hybrid method using both passive and active monitoring but including the first measurements factored into the model of network activity as they are performed.

In two useful embodiments the model of network activity is modelled as a Markov chain or alternatively modelled as a Bayesian network.

In a typical embodiment the first measurement is an active probe measurement. However this is not the only possibility and the first measurement could be made using passive probing. For example if passive monitoring were occurring as a background process, a previous passively obtained measurement could be reported as a first measurement.

In another typical embodiment the first measurement measures available bandwidth in the network. As an alternative, maximum capacity can be measured in the system. As would be understood by the skilled person other measurements relating to the resources, for example processing power, or packet loss, as would be known by the skilled person, can also be measured.

The invention is suitable for working in a system for assessing the resources in a network, comprising a controller arranged to initiate a first measurement of resources in the network, an activity monitor arranged to construct a model of network activity, and a confidence estimator arranged to derive an estimate of confidence for the validity of the first measurement from the model of network activity.

The controller, the activity monitor and the confidence estimator are typically software programs arranged to work in conjunction with each other. It is not critical that they reside in the same hardware device or component although in a typical embodiment they may be provided together in a device suitable for use in a domestic or other small network.

However, in a particularly advantageous further embodiment the network is coupled to a further network and further wherein the controller is situated in the further network. This provides a useful solution to the problem of how to measure resources in the network, in the manner of the invention, when the network under consideration does not have the programmed capability to perform the method. In such a case the method of the invention can be worked from outside the network itself using a gateway device at the edge of the network under consideration as a bridge. In such a case key components of the system can be provided on the gateway and either run from the gateway or controlled from outside the network.

The invention also relates to a gateway device suitable for performing the invention and arranged to couple a first network, the network under consideration, and to a second network, for example the internet or other wider network. The gateway device comprises a controller arranged to initiate a first measurement of resources in the first network, an activity monitor arranged to construct a model of network activity for the first network, and a confidence estimator arranged to derive an estimate of confidence for the validity of the first measurement from the model of network activity. This provides a particularly useful arrangement to perform the invention in a domestic or small network as most such networks comprise a gateway device through which they are coupled to the wider internet and which typically has continuous access to the whole domestic or small network.

In a particularly advantageous embodiment the activity monitor resides in the gateway device. This is because the greatest traffic load in the invention concerns the monitoring of network activity and this is advantageously performed at a gateway device because most traffic in a network goes through the gateway.

Additionally it is advantageous to have the activity model reside in the gateway device along with the activity monitor because this reduces the amount of traffic between monitor and model over the network.

However, a further embodiment of the invention is possible by allowing the activity model to reside not only outside the gateway but also outside the network under consideration. This embodiment relates to a method of assessing the resources of a first or second network, the method comprising the steps of performing a first measurement to measure resources in either the first network or the second network, constructing a model of network activity from an assessment of activity in the first network and in the second network, and deriving an estimate of confidence for the validity of the first measurement from the model of network activity. Use of this embodiment allows an activity model to be built up of the patterns of network use in several networks. Typically these networks are unrelated to each other in the sense of being unconnected to each other. Typically they will be networks in different households. This embodiment is advantageous, for example, if multiple households exhibit similar patterns of network usage as each other. Resources for monitoring network usage can be optimized by constructing a common network activity model over the group of households.

The invention as described solves the problem of how to deliver services at an acceptable level of quality because a measurement of resources can now be provided along with an estimate of confidence in that measurement. This reduces the level of network probing necessary to maintain quality of service. The invention allows this by modelling the network dynamics and using this model to derive a probabilistic estimation of the validity of the last measurement. In this manner a measurement of network resources can be executed only when the confidence in the last estimation goes below a certain threshold or limit.

These and other embodiments are explained further in the figures.

## Brief description of the drawings

Figure 1 shows a problem solved by the invention.
Figure 2 shows why, in a typical network of the prior art, estimate of network resources to arrange effective delivery of services is a problem.

Figure 3 shows an embodiment of a system capable of performing a method which offers a solution.

Figure 4 shows the network activity model inference process of the invention in more detail.

Figure 5 shows a network transition graph which depicts the states, and the transition probabilities between those states, that might be produced in a typical network activity model according to the invention.

Figure 6 shows a measurement confidence function with a pre-determined threshold or limit, as can be produced using the invention.

Figure 7 shows the controller logic of a system according to the invention.

## Detailed description

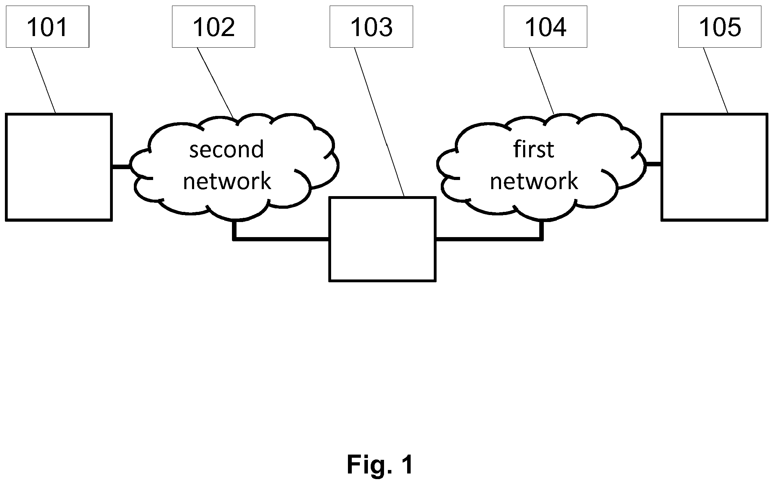

Fig. 1 shows a typical arrangement in which the invention is suitable for improving the delivery of service. A service provider 101 provides services, for example downloads, streaming, products over the internet etc., and delivers these over a second network 102, for example the internet, to a customer with access to the second network. Access to the second network is typically through a gateway device 103, which forms a bridge between the customer network, a first network 104 and the second network 102. A customer premises equipment 105, for example a computer, will typically be attached to the first network 104 and will be arranged to receive the product provided by the service provider 101.

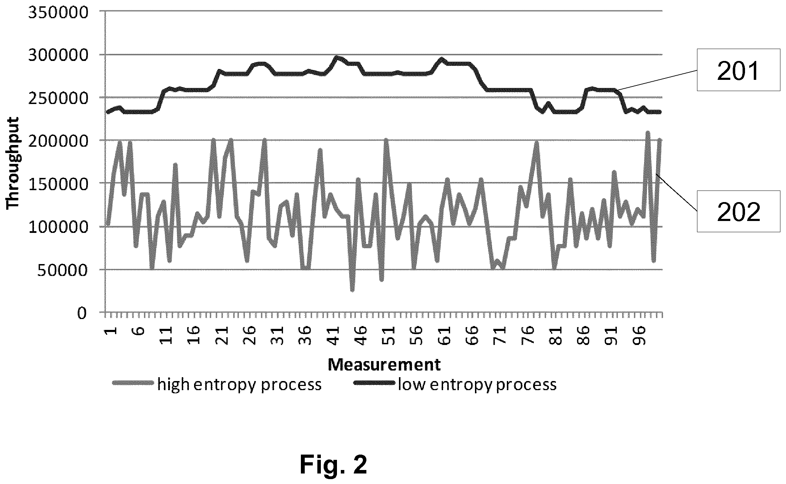

Fig. 2 shows why, in a typical network of the prior art, estimate of network resources to arrange effective delivery of services is a problem. The service provider may be requested to provide a service, say a streaming download, but to ensure effective delivery the service provider should know at any given time during the streaming download if the network has sufficient available resources to receive and use the service.

But to get an accurate measurement of throughput and latency in the network would require near continuous and thus excessive active probing which will consume resources from the network and lead to unacceptable network utilization and diminish the value of the system. But there is another challenge since network utilization can fluctuate significantly during active usage. Fig. 2 shows a graph of two typical systems, one system running a low entropy process, 201, and the other running a high entropy process 202. The low entropy system 201, while showing more utilization of the network actually shows a low entropy process in which the variation of utilization of the system, while not constant over time at least shows less variation over time. Information gained by probing this system can be considered to be representative of the system overall because the system will not vary greatly from instant to instant. A typical example is a domestic network during the night with a peer-to-peer download service running in the background: the utilization of the domestic network is high but it does not change much over a relatively long period of time. The high entropy system 202, however, while showing less overall utilization actually shows a high entropy process in which there is considerable variation in utilization of the system. Any information gained by probing this system will not necessarily be representative of the system because utilization of the system changes so much from moment to moment. Here a typical example is a domestic network in the early evening: many people using it concurrently for different types of services with different durations.

As will be understood by the skilled person, a low entropy system can also exhibit less utilisation and a high entropy system can exhibit higher utilisation. The graphs shown are merely examples of the problems inherent in deriving usable information using network probing.

Unfortunately, in order to work out in real-time if a system being probed is a high or low entropy system, or even some combination of the two, many measurements would be required and the load on the system, plus the degradation that would entail, would be considerable.

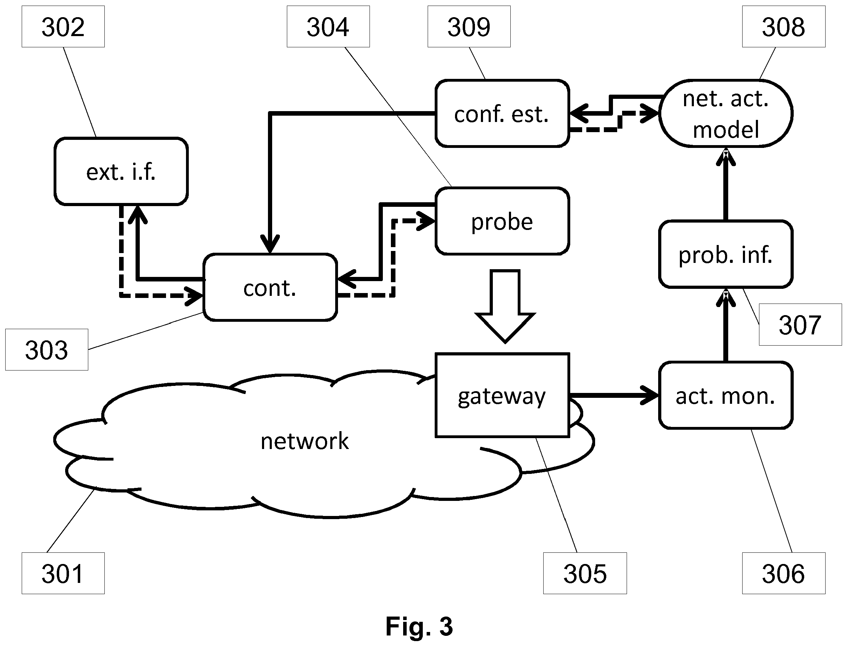

Fig. 3 shows an embodiment of a system capable of performing a method which offers a solution. This method minimizes the amount of measurements by modeling the activity in the network 301, which typically comprises an external interface 302 to a further network which includes a service provider. The typical system comprises a controller 303 arranged to control the process. The controller responds to external queries about the available resources and these queries will typically originate from a service provider. However they could also originate from inside the network itself.

The system further includes a probe mechanism 304, for example an active throughput probe, for probing the network. As will be known by the skilled person probing will typically be performed between nodes in the network, so for example if a service provider wishes to deliver a streaming download to a device in the network the probe must typically probe the route to the device. It is particularly advantageous, therefore, if the probe mechanism 304 is situated on a pathway or route through which services might typically be delivered to devices in the network, and a convenient place is on a gateway device 305 which couples the network to the external internet.

The system also includes an activity monitor 306 which, according to the invention, builds up a history of network activity by reading or otherwise analysing network activity. Advantageously, this can be done passively, using existing traffic in the network, to reduce network load. Such passive probing can be performed substantially continuously in the network which means that the existing network traffic is regularly and frequently sampled to provide data about what is happening in the network. However, the activity monitor can also make use of results of active probing previously obtained.

The activity monitor 306 aggregates the activity data and provides it to a probabilistic inference module 307 which builds and updates a network activity model 308. Optionally the activity monitor can also anonymise the data.

The system further includes a confidence estimator 309 which can query the network activity model 308 to receive an estimate of confidence. The result of the probe 304 and the estimate of confidence attained by the confidence estimator 309 are typically provided to the controller which is typically arranged to report or provide both values via the external interface 302 to an external service. Alternatively only the measurement may be provided or reported.

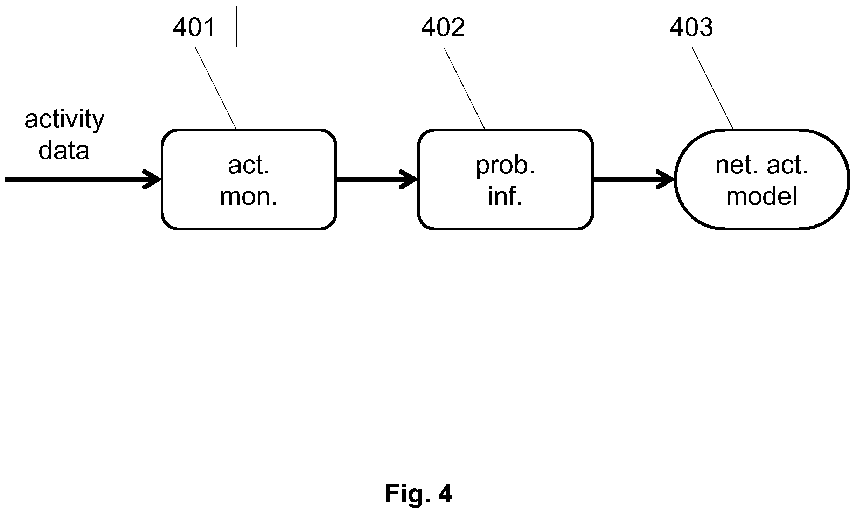

Figure 4 shows the network activity model inference process of the invention in more detail. The activity monitor 401 is a passive network measurement system, which collects continuous stream of data, for example traffic data, on the utilization of the network. This data is aggregated and can be anonymized, so that no private information is retained. The aggregated data is passed through the probabilistic inference module 402 that output a network activity model 403. The model typically contains no specific private information, only usage patterns and in a typical embodiment will never leave the private network.

When the activity model resides on a gateway, or somewhere inside the domestic network, the data does not need to be anonymised but if the activity model resides somewhere outside the network, for example on the server of a service provider or on some other computer somewhere in the wider internet then it might be appropriate to anonymise the data so that private information is not revealed in the patterns of network usage. In a further embodiment, if the activity model resides outside of any particular domestic network then it can be used to build up a model of data from several networks, for example from several households. The invention thus allows an aggregate activity model to be built. The advantage of this is that households may be identified which have similar patterns of network usage and whose networks therefore experience similar state dynamics. Putting data from these households, or networks, into the same activity model reduces the amount of computation ultimately needed to monitor the resources in these networks.

In one embodiment the network activity can be modeled as a Markov chain. As the skilled person knows, a Markov chain is a system that undergoes transition from one state to another. The number of states is finite and countable. The process of transition is random and depends only on the current state and not on any previous states that precede it. Here each state corresponds to level of randomness in the network that is further linked to the confidence in the active measurement.

In a particular embodiment of a network activity model a number of steps are taken to construct the model from the monitored network activity.

The network throughput measurements, provided by the activity monitor, are aggregated into 'activity samples'. Each activity sample will typically be few seconds to tens of seconds long. The common length of activity in the network is then inferred. Activity is defined as an event when there is a noticeable increase or decrease in the throughput. The duration of most activities in the edge network is short and typically they might fall into a range of 10-1000 seconds, with an average somewhere between 500 and 600 seconds. The common length' of activity defines the minimum time that the network is in a single state. This can be estimated to be the average time between two activities. For each sequence of 'activity samples' with length as the common length' the entropy is then calculated.

For example in the case where activity samples are around 10 seconds long. A sequence of activity samples 500-600 seconds long (around 50-60 samples) forms a sample group. For this sample group we can calculate the entropy using:

$$Entropy = -\sum_{x \in S} \big[ pmf(x) \log\big( pmf(x) \big) \big]$$

Where:

x is one 'activity sample'
S is the sequence of 'activity samples'
pmf(.) is a function that gives the probability of the sample. If x appears once in 50 samples the pmf(x) is 1/50. If x appears 25 times in a sequence of 50, the pmf(x) is 1/2.

The activity sample is quantized to specific ranges, for example every 10 kb/s. So if the activity sample value is between 25 kb/s and 34 kb/s the value will be rounded up to 30 kb/s. The fidelity of the size of the range, or quant, can be adjusted so that distinct levels of entropy can be achieved. Too fine a fidelity results in high entropy for most sequences, however too coarse a fidelity results in low entropy for most sequences.

The calculated range of entropies is divided uniformly, or otherwise, into a set of ranges and each range is associated with a state. The number of ranges is larger or equal to the number of states.

Various machine learning methods can be used to model the dynamics of the network. For instance by calculating the entropy on each group in the sequence of measured 'activity states' we can follow how the network evolved from stage to stage. Calculating the frequency of changes from one state to the other and normalizing over all the changes we can calculate the probability of evolution from one state to another. An optional final step includes the merging of states that only have links to one other state with this following state. This can be done without loss of generality, if such states exist in the results.

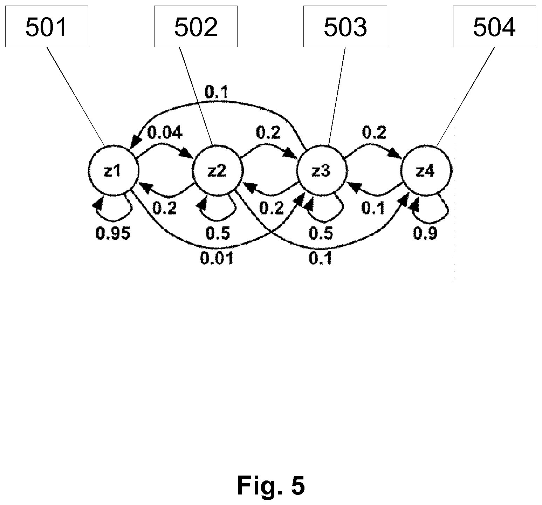

Fig. 5 depicts an example of a network transition graph, a graph that depicts the states and the transition probabilities between those states. This is the model for the activity of the network and in this case shows 4 possible states for a typical domestic network in operation, state z1, 501, state z2, 502, state z3, 503 and state z4, 504. Using this model and a measurement of the current state, we can now calculate the probability of the network being in each of the states after a given amount of time.

Alternatively other Machine Learning methods can be used to model the dynamics of the network, for instance with a supervised learning algorithm in the following manner.

A set of features is created on which a classifier can be trained which can predict the next state or states of the network. This can be achieved by using previously measured states as features going back a certain length, for example using the previous, or last, 10 states the network was in. The 'common length' can be also used as a feature, as well as the level of entropy for each state.

With a training dataset collected from passive network measurements a supervised learning algorithm is trained, for example a decision tree, neural network or support vector machine as is known in the art, to classify the state of the network. This approach can be further adjusted by substituting the single classifier by an ensemble of classifiers.

If, instead of a decision tree, neural network or support vector machine, a Bagging, Boosting or another classification ensemble is used, the vote of the ensemble on each state can be used to define the probability distribution for the system to go into each of the states in the next step. In this case the probabilities can be used to calculate many different future sequences in a similar fashion as the Markov chain from the first approach.

In an alternative approach, instead of using a classifier a Hidden Markov Model (HMM) can be used for detecting each state. For each state a HMM is trained using the same dataset, where the features are the previous states, but not the 'common length' or the level of entropy. These HMMs produce the probability of the next state given a list of previous states.

Following modeling of the network activity the model can be queried by a confidence estimator. Having a list of probabilities for future states, the confidence estimator may again use a Markov chain or similar to estimate the active measurement confidence.

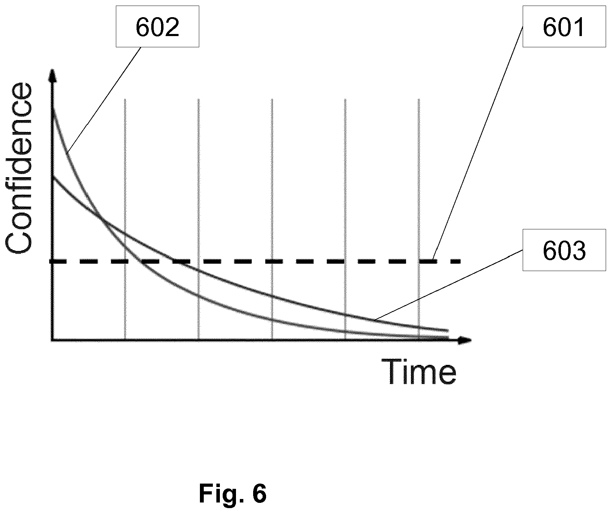

Fig. 6 shows a measurement of the time-dependent confidence function with a pre-determined threshold or limit 601. The level of randomness in each state further corresponds to the gradient of the confidence in the active measurement. If the network is in a higher random state, and is therefore more unpredictable, the confidence has a higher gradient and decreases faster with time. This is shown by slope 602.

Knowing the gradient of the curve for each state and the activity model we can calculate the validity of the active measurement in the future.

In an example where there are only two states the following may occur. In the first state the validity of the measurement drops by 50% after each 500 seconds. In the second state the validity of the measurement drops by 10% after each 500 seconds. The network is in the first state as measured initially, and there is a 60% chance that it will move to the second state.

The validity of the active measurement after 1000 seconds is:
50% for being in state 1 for the first 500 seconds.

In the following 500 seconds the validity will drop by either 50% or 10% depends in which state it is. The probability of staying in state 1 is 0.4 and moving to state 2 is 0.6.

So the values are:

$$50\% * (0.4*50\% + 0.6*90\%) = 37\%$$

More generally the validity is:

$$Validity = \prod_{t=1}^{m} \sum_{i=1}^{n} P(State\ Z_i, t) Confidence Z_i(t)$$

where n is the number of discrete states and m is the number of steps in the future.

The invention offers a computationally inexpensive way to estimate the confidence that the service provider can have in a private network throughput result obtained with a single active probing measurement. Especially in the case of high confidence, the invention thus addresses the main drawback of active probing, which is the overhead traffic, by optimizing the amount of active measurements by expanding a network dynamics model with confidence estimation of an active probe measurement. If an external service provider requests a value or estimate of the traffic or load on a system the validated estimation can be provided to the external service by this system as a means for optimizing the external service.

The invention proposes modeling of the activity of the private network in order to understand the validity of the measured throughput. The confidence in the measurement drops over time. However this decrease is not predetermined, as it depends on the state of the network. When the network is in a more stable state, the measurement remains valid for a longer period, and when the network is more dynamic the validity of the measurement is short-lived. The modeling process establishes the set of distinctive states for the network and the probability for the network to move from one to another state. This model can be then used to estimate the validity of the measurement.

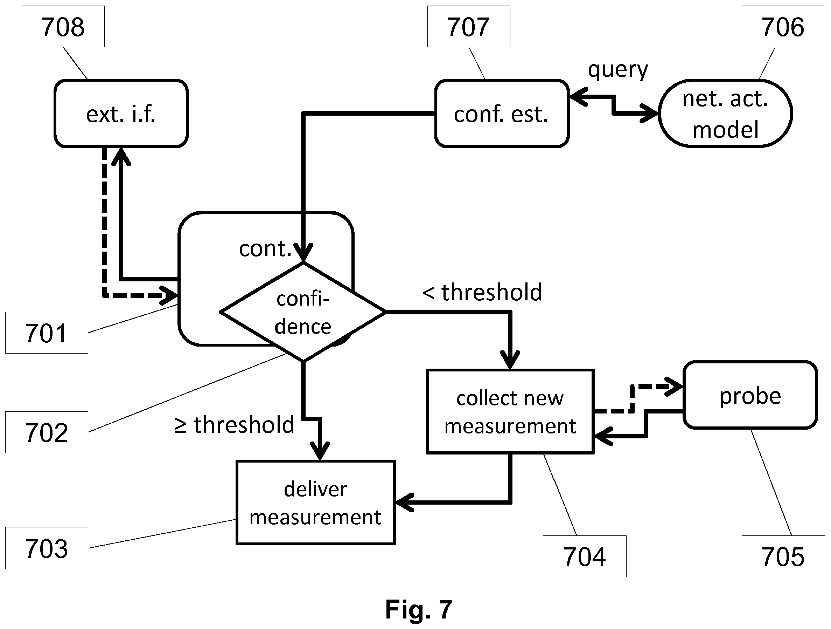

Figure 7 shows the controller logic of a system according to the invention. The controller 701 considers the estimate of confidence 702 which indicates if any measurement taken or derived by the probe 705 is valid. If the confidence in the last measurement taken by the probe 705 is above, say, a predefined threshold, or limit, the last measured value is considered as valid and is used as a measurement which is representative of the activity in the system 703. In this case the last measured value is provided to, or reported, as the response. Typically it will be reported to a requesting service through the external interface 708, but it can also be stored for use as a response to a future request made while the value remains valid. If the confidence in the last measurement taken by the probe 705 is less than a threshold or limit, then the controller initiates a new active measurement 704, typically by instructing the probe 705 to perform a new measurement. The network activity model 706 is built up over time and queried by the confidence estimator 707 to derive a value of confidence which can be used to assess each measurement as performed by the probe 705.

The invention can also be applied to other situations where the dynamics of the network are of importance. One such possibility is a wireless sensor network, where communication tasks can be scheduled according to the dynamics in the network.

**Claims**

1. A method of assessing resources of a network (301), the method comprising the steps of:

   - constructing a model of network activity (308) from an assessment of activity in the network (301), using a Machine Learning method, wherein the model comprises network activity states;
   - performing a first measurement to measure resources in the network (301);
   - detecting a network activity state by applying the Machine Learning method;
   - deriving an estimate of confidence for validity of the first measurement from the model of network activity (308) and the network activity state, wherein the validity of the first measurement indicates whether the first measurement is representative of the resources in the network (301), and wherein the estimate of confidence is a time for which the first measurement is valid or wherein the estimate of confidence is a chance that the first measurement will remain valid over a pre-determined time interval.

2. The method according to claim 1 wherein the method further includes the step of reporting the first measurement along with the estimate of confidence.

3. The method according to claim 1 wherein the method further includes the step of:

   - reporting the first measurement if the estimate of confidence is within a limit, or,
   - performing a second measurement if the estimate of confidence is not within a limit and reporting the second measurement.

4. The method according to claim 1 wherein the assessment of activity in the network is derived from passive monitoring of the network.

5. The method according to claim 4, wherein the passive monitoring of the network comprises sampling existing network traffic regularly and frequently.

6. The method according to claim 1 wherein the first measurement is an active probe measurement.

**7.** The method according to claim 1 where the first measurement measures available bandwidth in the network.

**8.** The method according to claim 1 wherein the model of network activity is modelled as a Markov chain.

**9.** The method according to claim 1 wherein the model of network activity is modelled as a Bayesian network.

**10.** The method according to claim 1, further comprising the step of:

- constructing a model of network activity from an assessment of activity in a first network and in a second network, wherein the first measurement to measure resources is performed in either the first network or the second network.

**11.** A system for assessing resources in a network (301) and comprising:

- a controller (303) arranged to initiate a first measurement of resources in the network (301);
- an activity monitor (306) arranged to

construct a model of network activity (308) of the network (301) using a Machine Learning method, wherein the model (308) comprises network activity states; and
detect a network activity state by applying the Machine Learning method; and

- a confidence estimator (309) arranged to derive an estimate of confidence for validity of the first measurement from the model of network activity (308) and the network activity state, wherein the validity of the first measurement indicates whether the first measurement is representative of the resources in the network (301), and wherein the estimate of confidence is a time for which the first measurement is valid or wherein the estimate of confidence is a chance that the first measurement will remain valid over a predetermined time interval.

**12.** A system according to claim 11 wherein the network is coupled to a further network and further wherein the controller is situated in the further network.

**13.** A gateway device (103) for a first network, the gateway (103) arranged to couple the network (104) to a second network (102), the gateway device (103) comprising:

- a controller (303) arranged to initiate a first measurement of resources in the first network (104);
- an activity monitor (306) arranged to

construct a model of network activity (308) for the first network (104) using a Machine Learning method, wherein the model (308) comprises network activity states; and
detect a network activity state by applying the Machine Learning method; and

- a confidence estimator (309) arranged to derive an estimate of confidence for validity of the first measurement from the model of network activity (308), and the network activity state, wherein the validity of the first measurement indicates whether the first measurement is representative of the resources in the network (301), and wherein the estimate of confidence is a time for which the first measurement is valid or wherein the estimate of confidence is a chance that the first measurement will remain valid over a predetermined time interval.

**Patentansprüche**

**1.** Verfahren zum Beurteilen von Ressourcen eines Netzwerks (301), wobei das Verfahren die folgenden Schritte umfasst:

- Konstruieren eines Modells der Netzwerkaktivität (308) anhand einer Beurteilung der Aktivität im Netzwerk (301) unter Verwendung eines Maschinenlernverfahrens, wobei das Modell Netzwerkaktivitätszustände umfasst;
- Durchführen einer ersten Messung, um Ressourcen im Netzwerk (301) zu messen;
- Detektieren eines Netzwerkaktivitätszustands durch Anwenden des Maschinenlernverfahrens;
- Ableiten einer Vertrauensschätzung zu einer Gültigkeit der ersten Messung anhand des Modells der Netzwerkaktivität (308) und des Netzwerkaktivitätszustands, wobei die Gültigkeit der ersten Messung anzeigt, ob die erste Messung für die Ressourcen im Netzwerk (301) repräsentativ ist, und wobei die Vertrauensschätzung eine Zeit ist, für die die erste Messung gültig ist, oder wobei die Vertrauensschätzung eine Aussicht ist, dass die erste Messung über ein vorbestimmtes Zeitintervall gültig bleibt.

2. Verfahren nach Anspruch 1, wobei das Verfahren ferner den Schritt des Meldens der ersten Messung zusammen mit der Vertrauensschätzung beinhaltet.

3. Verfahren nach Anspruch 1, wobei das Verfahren ferner den folgenden Schritt umfasst:

   - Melden der ersten Messung, wenn die Vertrauensschätzung innerhalb einer Grenze liegt, oder
   - Durchführen einer zweiten Messung, wenn die Vertrauensschätzung nicht innerhalb einer Grenze liegt, und Melden der zweiten Messung.

4. Verfahren nach Anspruch 1, wobei die Beurteilung der Aktivität im Netzwerk aus einer passiven Überwachung des Netzwerks abgeleitet wird.

5. Verfahren nach Anspruch 4, wobei das passive Überwachen des Netzwerks das regelmäßige und häufige Abtasten des bestehenden Netzwerkverkehrs umfasst.

6. Verfahren nach Anspruch 1, wobei die erste Messung eine aktive Sondenmessung ist.

7. Verfahren nach Anspruch 1, wobei die erste Messung eine verfügbare Bandbreite im Netzwerk misst.

8. Verfahren nach Anspruch 1, wobei das Modell der Netzwerkaktivität als eine Markov-Kette modelliert ist.

9. Verfahren nach Anspruch 1, wobei das Modell der Netzwerkaktivität als ein Bayes 'sches Netzwerk modelliert ist.

10. Verfahren nach Anspruch 1, das ferner den folgenden Schritt umfasst:

    - Konstruieren eines Modells der Netzwerkaktivität anhand einer Beurteilung der Aktivität in einem ersten Netzwerk und in einem zweiten Netzwerk, wobei die erste Messung zum Messen von Ressourcen entweder im ersten Netzwerk oder im zweiten Netzwerk durchgeführt wird.

11. System zum Beurteilen von Ressourcen in einem Netzwerk (301), das Folgendes umfasst:

    - eine Steuerung (303), die angeordnet ist, eine erste Messung von Ressourcen im Netzwerk (301) zu initiieren;
    - einen Aktivitätsmonitor (306), der zu Folgendem angeordnet ist:

      Konstruieren eines Modells der Netzwerkaktivität (308) des Netzwerks (301) unter Verwendung eines Maschinenlernverfahrens, wobei das Modell (308) Netzwerkaktivitätszustände umfasst; und
      Detektieren eines Netzwerkaktivitätszustands durch Anwenden des Maschinenlernverfahrens und

    - einen Vertrauensschätzer (309), der angeordnet ist, eine Vertrauensschätzung zu einer Gültigkeit der ersten Messung anhand des Modells der Netzwerkaktivität (308) und des Netzwerkaktivitätszustands abzuleiten, wobei die Gültigkeit der ersten Messung anzeigt, ob die erste Messung für die Ressourcen im Netzwerk (301) repräsentativ ist, und wobei die Vertrauensschätzung eine Zeit ist, für die die erste Messung gültig ist, oder wobei die Vertrauensschätzung eine Aussicht ist, dass die erste Messung über ein vorbestimmtes Zeitintervall gültig bleibt.

12. System nach Anspruch 11, wobei das Netzwerk an ein weiteres Netzwerk gekoppelt ist und wobei ferner die Steuerung sich im weiteren Netzwerk befindet.

13. Gatewayvorrichtung (103) für ein erstes Netzwerk, wobei das Gateway (103) angeordnet ist, das Netzwerk (104) an ein zweites Netzwerk (102) zu koppeln, wobei die Gatewayvorrichtung (103) Folgendes umfasst:

    - eine Steuerung (303), die angeordnet ist, eine erste Messung von Ressourcen im ersten Netzwerk (104) zu initiieren;

- einen Aktivitätsmonitor (306), der zu Folgendem angeordnet ist:

Konstruieren eines Modells der Netzwerkaktivität (308) für das erste Netzwerk (104) unter Verwendung eines Maschinenlernverfahrens, wobei das Modell (308) Netzwerkaktivitätszustände umfasst; und Detektieren eines Netzwerkaktivitätszustands durch Anwenden des Maschinenlernverfahrens und

- einen Vertrauensschätzer (309), der angeordnet ist, eine Vertrauensschätzung zu einer Gültigkeit der ersten Messung anhand des Modells der Netzwerkaktivität (308) und des Netzwerkaktivitätszustands abzuleiten, wobei die Gültigkeit der ersten Messung anzeigt, ob die erste Messung für die Ressourcen im Netzwerk (301) repräsentativ ist, und wobei die Vertrauensschätzung eine Zeit ist, für die die erste Messung gültig ist, oder wobei die Vertrauensschätzung eine Aussicht ist, dass die erste Messung über ein vorbestimmtes Zeitintervall gültig bleibt.

**Revendications**

1. Procédé d'évaluation des ressources d'un réseau (301), le procédé comprenant les étapes suivantes :

construire un modèle d'activité de réseau (308) à partir d'une évaluation de l'activité dans le réseau (301), en utilisant un procédé d'apprentissage machine, où le modèle comprend des états d'activité de réseau ;
effectuer une première mesure pour mesurer les ressources dans le réseau (301) ;
détecter un état d'activité de réseau en appliquant le procédé d'apprentissage machine ;
dériver une estimation de confiance pour la validité de la première mesure à partir du modèle d'activité de réseau (308) et de l'état d'activité de réseau, où la validité de la première mesure indique si la première mesure est représentative des ressources du réseau (301), et où l'estimation de confiance est un temps pendant lequel la première mesure est valide ou où l'estimation de confiance est une probabilité que la première mesure reste valide sur un intervalle de temps prédéterminé.

2. Procédé selon la revendication 1, dans lequel le procédé comprend en outre l'étape comprenant de rapporter la première mesure avec l'estimation de confiance.

3. Procédé selon la revendication 1, dans lequel le procédé comprend en outre les étapes suivantes :

rapporter la première mesure si l'estimation de confiance se situe dans une certaine limite, ou
effectuer une seconde mesure si l'estimation de confiance ne se situe pas dans une certaine limite et rendre compte de la seconde mesure.

4. Procédé selon la revendication 1, dans lequel l'évaluation de l'activité dans le réseau est dérivée de la surveillance passive du réseau.

5. Procédé selon la revendication 4, dans lequel la surveillance passive du réseau comprend d'échantillonner le trafic réseau existant de manière régulière et fréquente.

6. Procédé selon la revendication 1, dans lequel la première mesure est une mesure de sonde active.

7. Procédé selon la revendication 1, dans lequel la première mesure mesure la largeur de bande disponible dans le réseau.

8. Procédé selon la revendication 1, dans lequel le modèle d'activité de réseau est modélisé sous forme de chaîne de Markov.

9. Procédé selon la revendication 1, dans lequel le modèle d'activité de réseau est modélisé sous forme de réseau bayésien.

10. Procédé selon la revendication 1, comprenant en outre l'étape suivante :
construire un modèle d'activité de réseau à partir d'une évaluation de l'activité dans un premier réseau et dans un second réseau, où la première mesure pour mesurer les ressources est effectuée soit dans le premier réseau, soit dans le second réseau.

**11.** Système pour évaluer des ressources dans un réseau (301) et comprenant :

un contrôleur (303) arrangé pour initier une première mesure de ressources dans le réseau (301) ;
un moniteur d'activité (306) arrangé pour construire un modèle d'activité de réseau (308) du réseau (301) en utilisant un procédé d'apprentissage machine, où le modèle (308) comprend des états d'activité de réseau ; et détecter un état d'activité de réseau en appliquant le procédé d'apprentissage machine ; et
un estimateur de confiance (309) arrangé pour dériver une estimation de confiance pour la validité de la première mesure à partir du modèle d'activité de réseau (308) et de l'état d'activité de réseau, où la validité de la première mesure indique si la première mesure est représentative des ressources du réseau (301), et où l'estimation de confiance est un temps pendant lequel la première mesure est valide ou dans lequel l'estimation de confiance est une probabilité que la première mesure reste valide sur un intervalle de temps prédéterminé.

**12.** Système selon la revendication 11, dans lequel le réseau est couplé à un autre réseau et dans lequel, en outre, le contrôleur est situé dans le réseau supplémentaire.

**13.** Dispositif de passerelle (103) pour un premier réseau, la passerelle (103) étant arrangée pour coupler le réseau (104) à un second réseau (102), le dispositif de passerelle (103) comprenant :

un contrôleur (303) arrangé pour initier une première mesure de ressources dans le premier réseau (104) ;
un moniteur d'activité (306) arrangé pour construire un modèle d'activité de réseau (308) pour le premier réseau (104) en utilisant un procédé d'apprentissage machine, où le modèle (308) comprend des états d'activité de réseau ; et
détecter un état d'activité de réseau en appliquant le procédé d'apprentissage machine ; et
un estimateur de confiance (309) arrangé pour dériver une estimation de confiance pour la validité de la première mesure à partir du modèle d'activité de réseau (308), et de l'état d'activité de réseau, où la validité de la première mesure indique si la première mesure est représentative des ressources du réseau (301), et où l'estimation de confiance est un temps pendant lequel la première mesure est valide ou dans lequel l'estimation de confiance est une probabilité que la première mesure reste valide sur un intervalle de temps prédéterminé.

| 101 | | 102 | | 103 | | 104 | | 105 |

second
network

first
network

**Fig. 1**

**Fig. 2**

**Fig. 3**

401 — act. mon.

402 — prob. inf.

403 — net. act. model

activity data

Fig. 4

Fig. 5

Fig. 6

**Fig. 7**

EP 3 025 452 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- Archi Delphinanto. Eindhoven University of Technology, 2012

- **DE A. ROCHA et al.** An End-to-End Technique to Estimate the Transmission Rate of an IEEE 802.11 WLAN. *Proceedings of the 2007 IEEE International Conference on Communications,* 2007, 415-420